# EUROPEAN PATENT APPLICATION

(11) **EP 2 955 880 A1**
(43) Date of publication of application: **16.12.2015**
(21) Application number: 14172384.1
(22) Date of filing: 13.06.2014
(51) Int. Cl.: H04L 12/58

(54) **A quality evaluetion method for digitally published data content, especially in terms of abuses committed by Internet users**

(30) Priority: 10.06.2014 PL 40850114
(71) Applicant: eo Networks S.A., 02-215 Warszawa (PL)
(72) Inventor: Sulej, Tomasz, 02-593 Warszawa (PL)
(74) Representative: Sielewiesiuk, Jakub

(57) **Abstract**

The present invention is a quality evaluation method for digitally published data content, especially in terms of abuses committed by Internet users in a computer system containing at least a first server that allows the publication of internet content on web sites by internet users, especially by the http protocol, and at least a second server with digitally published data content evaluation software with access to a reference database, according to the invention characterized by containing the following steps:
a) asynchronous data transfer from the first server to be analyzed by the second server's software, where data includes the relevant content and auxiliary data;
b) analysis of the relevant content and the auxiliary data by the second server's software with the help of the data collected in the reference data base;
c) result of the evaluation of the digitally published data is sent to the first server in a format specified by it, preferably binary, spot or other required format.

## Description

The invention relates to a quality evaluation method for digitally published data content, especially in terms of abuses committed by Internet users. In the presented method, digital content is evaluated by reliable factors that allow the estimation of their quality.

A similar solution called Akismet is known, developed by the company automattic.com [http://automattic.com].

Technically distant, but approaching the same subject, is the US patent US 8023697 B1 for Kaspersky Lab.

Further, a solution containing a similar technical attitude, although used for completely different purposes, is known in the SpamAssasin project (http://spamassasin.apache.org). The mentioned solution is exclusively used for e-mail content analysis.

A thematically similar solution is mentioned in the US patent US20040221062, but this also related only to e-mail content.

Further, some elements of the described solution can be found in the US patent US7716297 B1.

Existing solutions lack the adaptation ability for analyzing digitally published content using the http protocol. Most of the existing solutions and products primarily analyses the content transferred by the SMTP, IMAP and POP3 protocols, there are no solutions that allow their use to analyses and evaluate the content served on web sites in internet browsers. Meanwhile, continuously more content is served by users through the http protocol directly into the internet browser, e.g. on social networks, advertising sites or site comments. Those publications are obviously susceptible to abuse (publishing of illegal or morally inconsistent content, unwanted adverts, spam/scam, etc.). Therefore, an implementation and development of an effective evaluation method for such contents and its filtering is needed.

The quality evaluation method for digitally published data content, especially in terms of abuses committed by Internet users in a computer system containing at least a first server that allows the publication of internet content on web sites by internet users, especially by the http protocol, and at least a second server with digitally published data content evaluation software with access to a reference database, according to the invention is characterized by containing the following steps:
a) asynchronous data transfer from the first server to be analyzed by the second server's software, where data includes the relevant content and auxiliary data;
b) analysis of the relevant content and the auxiliary data by the second server's software with the help of the data collected in the reference data base;
c) result of the evaluation of the digitally published data is sent to the first server in
   a format specified by it, preferably binary, spot or other required format.

Preferably, further containing the step of
d) updating and verifying of the reference database.

Preferably, in the step a) the auxiliary data contains chosen or all of the following data: source IP address from which the content publication of the analyzed relevant content was made, content country of origin, date of content publication or other data defined by the operator.

Preferably, in the step b) the relevant content and auxiliary data analysis contains an evaluation of chosen or all of the following criteria:
- patterns occurrence, specific words
- number of words
- occurrence of words deemed conducive to fraud (e.g. Viagra, software, pills, lottery)

- number of so called whitespaces
- the amount of digits in the content
- the method of communication
- readability algorithm based on the Robert Gunning algorithms (Gunning fog index)
- the content author country of origin
- node names of the IP address overseers
- the occurrence of the analyzed content IP address in the unique IP address database
- number of *Uniform Resource Locators* (URLs) in the analyzed content
- URL target and its potential illegality
- method of the domain address configuration
- the accuracy of the data in the specially for the solution designed server pyWHOIS
- DNS server change frequency index for suspicious domains.

Preferably, in the step b) the relevant content and auxiliary data analysis contains an evaluation of chosen or all of the following activities:
- the usage of existing data about so-called autonomic systems and connecting them with the spam/scam/unwanted content source
- usage of fog index in the context of spam/scam/web fraud analysis
- DNS server analysis contained in the unwanted content
- automatic services analysis contained in the unwanted content
- detection of similar content.

Preferably, in the step d) the relevant content and auxiliary data analysis contains an evaluation of chosen or all of the following activities:
- update and automatic analysis of fraud considered web services
- automatic terms and words considered undesirable update
- automatic passive and active activities related to the acquisition of new unwanted content
- adaptive response to change of unwanted content over time.

The solution according to the present invention allows an effective detection and filtering of unwanted content, owing to research work on mass of content deemed fraud and analytical work related to mathematical optimization algorithms, based on well-known research - WEBSPAM-UK2007 and WEBSPAM-UK2006. With the inclusion of the terminal IP address from which the publication was made in the analysis and using it as an element for content analysis, more precisely - with the creating and usage of a list/base of node names typical for fraud sources in the present invention achieves a very high efficiency. The usage of non-relational attitude in context of the data storage (document context) allowed a further breakthrough making the storage of hundreds of millions addresses on computers with average power possible.

The basic unique features of the invention are:
- the usage of existing data about so-called autonomous systems (http://en.wikipedia.org/wiki/Autonomous_System_(Internet)) and connecting them with spam/scam/unwanted content sources (in most cases spam sources belong to a particular autonomous system or a group of autonomous nodes, connected geographically or financially, e.g. a financial or telecommunication group operating in many countries);
- the usage of fog index in context of spam/scam/web fraud analysis;
- the analysis of DNS servers of websites located in the unwanted content;
- automatic web service analysis located in the unwanted content;
- detection of similar content (usually frauds in the scale of millions of date do not differ significantly from each content).

The invention will be know presented with a brief description of the accompanying drawings:
Figure 1 schematically shows a simplified data flow in the method of the invention
Figure 2 shows schematically a simplified diagram of the acquisition, storage, and update about spam/scam/unwanted content, used in the method of the invention

### Preferred embodiment of the invention

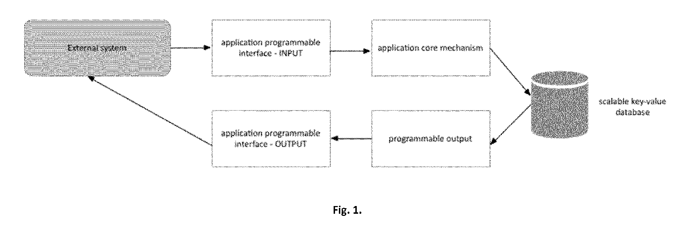

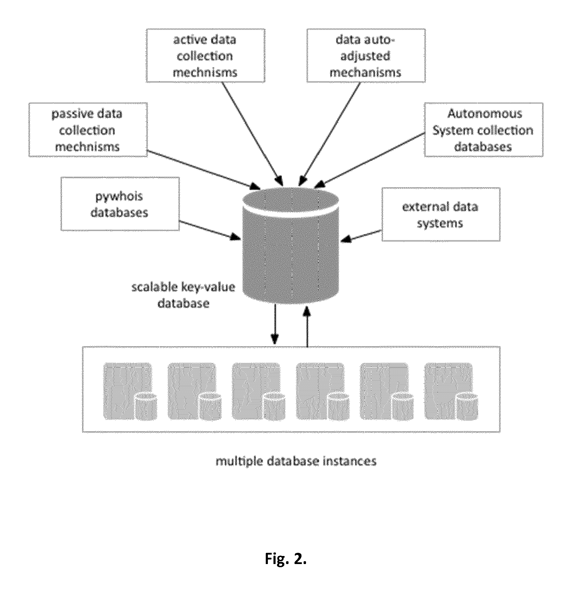

An example of the profitable implementation of the invention is the usage of the invention for the purpose of an online advertising service, publishing among others content collected from internet users. The implementation and commissioning took place on a test instance, not accessible for public. A part of the content does not meet the statutory conditions, some of it is classic elements of extortion and illegal fraud content. The electronic content evaluation system, being content of this invention (schematic illustration on figure 1) functions in the discussed example as follows:
- the data to be evaluated is sent asynchronously to the electronic contents evaluation system;
- the data to be evaluated consists of the relevant content (core-data) and auxiliary data (meta-data);
- the relevant content (core-data) is the key element to be evaluated;
- the meta-data is a key element in the process of data analysis and data reliability rating;
- the meta-data consists among others of: source IP address from which the analyzed content was published, content country of origin, date of content publication, or any other data defined by the web service owner (the web service owner is able to redefine/change the mentioned data);
- the relevant and auxiliary data are analyzed among other in the light of:
   o patterns occurrence, specific words
   o number of words
   ∘ occurrence of words deemed conducive to fraud (e.g. Viagra, software, pills, lottery)
   o number of so called whitespaces
   o the amount of digits in the content
   o the method of communication
   o readability algorithm based on the Robert Gunning algorithms (Gunning fog index)
   o the content author country of origin
   o node names of the IP address overseers
   o the occurrence of the analyzed content IP address in the unique IP address database
   o number of *Uniform Resource Locators* (URLs) in the analyzed content
   o URL target and its potential illegality
   o method of the domain address configuration (most of the domains considered as fraud promoting are configured in a way making an identification possible)
   o the accuracy of the data in the specially for the solution designed server pyWHOIS
   o DNS server change frequency index for suspicious domains
- after the analysis is made, the result is sent to the system asking in the format defined; it can be a binary answer: 1:0, spot, or any other defined by the system user;
- the electronic evaluating system performs regular tasks related to updating and verification of the received data (schema on figure 2):
   o update and automatic analysis of fraud considered web services
   o automatic terms and words considered undesirable update
   o automatic passive and active activities related to the acquisition of new unwanted content
   o adaptive response to change of unwanted content over time

## Claims

1. The quality evaluation method for digitally published data content, especially in terms of abuses committed by Internet users in a computer system containing at least a first server that allows the publication of internet content on web sites by internet users, especially by the http protocol, and at least a second server with digitally published data content evaluation software with access to a reference database, according to the invention is **characterized by** containing the following steps:
a) asynchronous data transfer from the first server to be analyzed by the second server's software, where data includes the relevant content and auxiliary data;
b) analysis of the relevant content and the auxiliary data by the second server's software with the help of the data collected in the reference data base;
c) result of the evaluation of the digitally published data is sent to the first server in a format specified by it, preferably binary, spot or other required format.

2. Method as in claim 1, **characterized by** containing additionally a step d) updating and verifying of the reference database.

3. Method as in claim 1 or 2, **characterized by** that in the step a) the auxiliary data contains chosen or all of the following data: source IP address from which the content publication of the analyzed relevant content was made, content country of origin, date of content publication or other data defined by the operator.

4. Method as in claim 1, 2 or 3, **characterized by** that in step b) the relevant content and auxiliary data analysis contains an evaluation of chosen or all of the following criteria:
• patterns occurrence, specific words
• number of words
• occurrence of words deemed conducive to fraud (e.g. Viagra, software, pills, lottery)
• number of so called whitespaces
• the amount of digits in the content
• the method of communication
• readability algorithm based on the Robert Gunning algorithms (Gunning fog index)
• the content author country of origin
• node names of the IP address overseers
• the occurrence of the analyzed content IP address in the unique IP address database
• number of *Uniform Resource Locators* (URLs) in the analyzed content
• URL target and its potential illegality
• method of the domain address configuration
• the accuracy of the data in the specially for the solution designed server pyWHOIS
• DNS server change frequency index for suspicious domains.

5. Method as in claim 1, 2, 3 or 4 **characterized by** that in step b) the relevant content and auxiliary data analysis contains an evaluation of chosen or all of the following activities:
• the usage of existing data about so-called autonomic systems and connecting them with the spam/scam/unwanted content source
• usage of fog index in the context of spam/scam/web fraud analysis
• DNS server analysis contained in the unwanted content
• automatic services analysis contained in the unwanted content
• detection of similar content.

6. Method as in claim 2, 3, 4 or 5, **characterized by** that in the step d) the relevant content and auxiliary data analysis contains an evaluation of chosen or all of the following activities:
• update and automatic analysis of fraud considered web services
• automatic terms and words considered undesirable update
• automatic passive and active activities related to the acquisition of new unwanted content
adaptive response to change of unwanted content over time.
